# EUROPÄISCHE PATENTSCHRIFT

(11) **EP 2 188 340 B1**
(45) Veröffentlichungstag und Bekanntmachung des Hinweises auf die Patenterteilung: **08.07.2015**
(21) Anmeldenummer: 08785315.6
(22) Anmeldetag: 02.08.2008
(51) Int. Cl.: C09D 5/00, C08L 71/00

(54) **POLYPROPYLENOXID-HALTIGE POLYETHER UND DEREN MISCHUNGEN MIT POLY(METH)ACRYLATEN ALS PULVERLACKVERLAUFMITTEL**
POLYPROPYLENE OXIDE-CONTAINING POLYETHER AND MIXTURES THEREOF WITH POLY(METH)ACRYLATES AS POWER COATING LEVELING AGENTS
POLYÉTHERS À TENEUR EN OXYDE DE POLYPROPYLÈNE, ET LEURS MÉLANGES AVEC DES POLY(MÉTH)ACRYLATES EN TANT QU'AGENTS D'ÉCOULEMENT POUR PEINTURES EN POUDRE

(30) Priorität: 11.09.2007 DE 102007043048
(43) Veröffentlichungstag der Anmeldung: 26.05.2010
(73) Patentinhaber: BYK-Chemie GmbH, 46483 Wesel (DE)
(72) Erfinder: GÖBELT, Bernd, 46487 Wesel (DE); JUCKEL, Heiko, 46485 Wesel (DE); LAUNAG, Thomas, 46562 Voerde (DE)
(74) Vertreter: Leifert & Steffan
(86) Internationale Anmeldenummer: PCT/EP2008/006383
(87) Internationale Veröffentlichungsnummer: WO 2009/033529

(56) Entgegenhaltungen:
- WO-A-02/092660
- WO-A-2005/059048
- US-A- 3 385 816
- US-A- 6 114 489

## Beschreibung

Die Erfindung betrifft Pulverlackverlaufmittel für Pulverlackzusammensetzungen umfassend Polypropylenoxid-haltigen Polyether und deren Mischungen mit Poly(meth)acrylaten sowie die Herstellung solcher Mischungen und deren Verwendung als Verlaufmittel in Pulverlackzusammensetzungen, insbesondere für Oberflächenbeschichtungen. Des Weiteren betrifft die Erfindung Pulverlacke, welche die erfindungsgemäßen Verlaufmittel enthalten.

Lackoberflächen sind im Normalfall nicht ganz glatt, sondern weisen eine mehr oder weniger strukturierte Oberfläche auf, die als Welligkeit oder auch Orangenschalenstruktur bezeichnet wird. Diese Oberflächen können fein strukturiert mit einer kurzen Welle, oder grob strukturiert mit einer langen Welle sein. In den meisten Fällen ist diese Welligkeit nicht erwünscht. Es besteht insbesondere eine Abhängigkeit zwischen der Art der Oberflächenstruktur und der Zusammensetzung der Beschichtungsmittel. So spielt es eine Rolle, ob das Beschichtungsmittel beispielsweise Lösemittel enthält oder aber lösemittelfrei ist, wie dies für Pulverlacke der Fall ist. Bei den lösemittelfreien Pulverlacken ist es beispielsweise zwingend notwendig in deren Zusammensetzungen Verlaufmittel einzusetzen, da ohne diese Verlaufmittel keine ausreichend glatten Oberflächen erhalten werden.

In der Monogaphie "Performance Enhancement in Coatings" von E. W. Orr (1998, Verlag: Hanser, ISBN 3-446-19405-3) werden Poly(meth)acrylsäureester und Polysiloxane als verlauffördernde Mittel für Beschichtungen beschrieben.

Bei den eingesetzten Polysiloxanen handelt es sich meistens um Polydimethylsiloxane, Polymethylalkylsiloxane oder aber auch um Polyether- oder Polyester-modifizierte Polydimethyl- oder Polymethylalkylsiloxane.

Beim Einsatz von Poly(meth)acrylaten werden bevorzugt Polymere oder Copolymere von Acrylsäurealkylestern mit einer Kettenlänge des Alkylrestes 2 bis 12 Kohlenstoffatomen eingesetzt. Beispiele solcher (Meth)acrylsäurealkylester sind Ethylacrylat, n-Butylacrylat, 2-Ethylhexylacrylat oder auch Laurylacrylat. Die verwendeten Produkte besitzen üblicherweise gewichtsmittlere Molekulargewichte von bis zu 100000 g/mol.

Die als verlauffördernde Mittel eingesetzten Poly(meth)acrylat(co)polymere können als solche oder als Lösungen in organischen Lösungsmitteln, aber auch auf Trägermaterialien wie beispielsweise Kieselsäure aufgebracht, eingesetzt werden. Dies ist besonders bei der Verwendung in Pulverlacken üblich. Die Einsatzmengen solcher Produkte betragen üblicherweise 0,1 bis 2 Gew.-% bezogen auf die Beschichtungsformulierungen.

Die DE 196 44 728 beschreibt als eine weitere Verbindungsklasse Polyvinylether als Verlaufmittel für Pulverlacke.

Die Wirkung dieser verlauffördernden Mittel beruht auf einer Grenzflächenaktivität an der Grenzfläche "flüssig/gasförmig", an die sich diese Produkte aufgrund einer gewissen Unverträglichkeit mit dem eigentlichen Bindemittel des Beschichtungssystems orientieren. Diese Unverträglichkeit kann durch Erhöhung des Molekulargewichtes dieser Polymere gesteigert werden. Nachteilig ist dann jedoch, dass aufgrund der Unverträglichkeit eine gewisse Trübung der Beschichtung auftreten kann und die Viskosität des Verlaufmittels so hoch wird, dass eine leichte Handhabung für den Anwender nicht oder nur sehr schwer gegeben ist. Zusätzlich neigen Polysiloxane zu starken Unverträglichkeiten mit dem Beschichtungsmaterial, welches sich zum Beispiel durch Kraterbildung im Beschichtungsfilm äußert. Dadurch sind der Einsatz und besonders die Einsatzmenge von Polysiloxanen begrenzt. Sie werden trotzdem häufig in Kombination mit Poly(meth)acrylsäureestern eingesetzt, da sie zusätzlich zu ihren verlauffördernden Eigenschaften die Oberflächenspannung des Beschichtungsmaterials senken und somit die Benetzung des Substrates durch das Beschichtungsmaterial unterstützen.

Die US 3 385 816 beschreibt einen besseren Verlauf von lösemittelhaltigen Polyurethanlacken über einen viskositätsreduzierenden Effekt durch Zugabe bestimmter Polyetherhaltiger Verbindungen.

Die WO2005/059048A1 beschreibt Beschichtungsmittelzusammensetzungen enthaltend polymere und copolymere Verlaufmittel, die über nitroxylvermittelte Polymerisation hergestellt wurden. Desweiteren wird ein Prozess zur Herstellung von glatten Oberflächenbeschichtungen unter Verwendung der genannten Polymere oder Copolymere als Verlaufmittel in Beschichtungsmittelzusammensetzungen beschrieben.

Die WO02/092660A beschreibt ein fluorhaltiges Polymer, das als Benetzungsmittel oder Verlaufmittel verwendet werden kann und mindestens eine polare Gruppe enthält.

Die US6114489A beschreibt neue Pulverbeschichtungsmittelzusammensetzungen, die reaktive stark verzweigte Polymere enthalten. Bevorzugte Darstellungen enthalten Pulverbeschichtungsmittelzusammensetzungen gebildet aus hyperverzweigten Polyestern mit terminalen Hydroxy-, Carboxy-, Epoxy-, und Isocyanatgruppen.

Die US3385816A beschreibt die geringfügige, aber wirksame Zugabe von Glycoldiethern und bestimmten Polyethern zu Urethanharzlösungen eines endständigen Isocyanatpolyetherpolyols in einem Kohlenwasserstofflösungsmittel zur Verringerung der Viskosität der Urethanharzlösung. Gleichzeitig agieren die Zusätze als Verlaufmittel in der resultierenden Urethanbeschichtung, die im Wesentlichen klar und frei von Dellen ist.

Besonders für Pulverlacke und in der Bandbeschichtung (Coil Coating) eingesetzte Lacke besteht jedoch ein dringender Bedarf an guten, aber preisgünstigen Verlaufmitteln. Hierbei muss das Verlaufmittel neben der verlaufsfördernden Eigenschaft auch gleichzeitig die Untergrundbenetzung des Lackes verbessern, welche es ermöglicht, absolut glatte Beschichtungsfilme zu erzeugen.

Diese Aufgaben konnten durch Pulverlackverlaufmittel gelöst werden, die (a) mindestens einen Polypropylenoxid-haltigen Polyether mit einem gewichtsmittleren Molekulargewicht größer als 1000 g/mol, besonders bevorzugt größer 1500 g/mol und ganz besonders bevorzugt größer 2000 g/mol und einem Polypropylenoxidanteil größer als 75 Gew-% und (b) Poly(meth)acrylate enthalten. Das gewichtsmittlere Molekulargewicht lässt sich mittels Gelpermeationschromatographie unter Verwendung eines Polystyrolstandards bestimmen.

Diese Pulverlackverlaufmittel werden im Folgenden als erfindungsgemäße Pulverlackverlaufmittel oder erfindungsgemäße Verlaufmittel bezeichnet.

Die Schreibweise Poly(meth)acrylat beziehungsweise (Meth)acrylat steht hierin - wie dem Durchschnittsfachmann geläufig - für Polyacrylat und Polymethacrylat beziehungsweise Acrylat und Methacrylat.

Im Vergleich zu reinen Poly(meth)acrylaten als Verlaufmittel, zeichnen sich die erfindungsgemäßen Verlaufmittel in Pulverlacken durch eine Slipreduzierung aus. Der Begriff Slipreduzierung bedeutet eine Reduktion des Gleitwiderstandes auf der ausgehärteten Beschichtungsmitteloberfläche.

Pulverklarlacke neigen bei Verwendung von reinen Poly(meth)acrylaten zur Eintrübung. Eine Eintrübung tritt jedoch nicht bei der Verwendung der erfindungsgemäßen Verlaufmittel auf, die breiter verträglich sind als reine Poly(meth)acrylate.

Die erfindungsgemäßen Pulverlackverlaufmittel umfassen (a) mindestens einen Polypropylenoxid-haltigen Polyether mit einem gewichtsmittleren Molekulargewicht größer als 1000 g/mol, besonders bevorzugt größer 1500 g/mol und ganz besonders bevorzugt größer 2000 g/mol und einem Polypropylenoxidanteil größer als 75 Gew-%, vorzugsweise größer 80 Gew.-%, besonders bevorzugt größer 90 Gew.-% und ganz besonders bevorzugt von 100 Gew-%, und (b) mindestens ein Poly(meth)acrylat.

Das erfindungsgemäße Verlaufmittel kann durch einen Mischvorgang der beiden Komponenten (a) und (b), der durch Erwärmen der Polymerlösungen unterstützt werden kann, erhalten werden.

Ein weiteres, bevorzugtes Verfahren zur Herstellung des erfindungsgemäßen Verlaufmittels ist die Herstellung der Komponente (b) unter Verwendung der Komponente (a) als Lösemittel oder Trägermedium.

Die beiden Komponenten (a) und (b) können in unterschiedlichen Gewichtsanteilen im erfindungsgemäßen Pulverlackverlaufmittel vorliegen. Im erfindungsgemäßen Verlaufmittel liegt Komponente (a) vorzugsweise zu 10 bis 100 Gew-%, besonders bevorzugt 10 bis 75 Gew-% und ganz besonders bevorzugt 10 bis 50 Gew-%, bezogen auf die Summe der Gewichtsanteile der Komponenten (a) und (b) vor. Dies bedeutet, dass Komponente (b) vorzugsweise bis zu 90 Gew.-%, besonders bevorzugt zu 25 bis 90 Gew.-% und ganz besonders bevorzugt zu 50 bis 90 Gew.-% bezogen auf die Summe der Gewichtsanteile der Komponenten (a) und (b) im erfindungsgemäßen Pulverlackverlaufmittel enthalten ist.

Die als Komponente (a) verwendeten Polyalkylenoxide (hierin auch als Polyether bezeichnet) zeichnen sich dadurch aus, dass sie einen Propylenoxidanteil größer als 75 Gew-%, vorzugsweise größer 80 Gew.-%, besonders bevorzugt größer 90 Gew.-% und ganz besonders bevorzugt von 100 Gew-% und ein gewichtsmittleres Molekulargewicht größer als 1000 g/mol besitzen. Sie sind ganz besonders bevorzugt nur aus C-, H- und O-Atomen aufgebaut.

Bei den Polyalkylenoxiden kann es sich um lineare Polyalkylenoxide handeln, die durch einen Monoalkohol oder durch einen Dialkohol gestartet sind. Derartige Polyalkylenoxide weisen folglich eine beziehungsweise zwei endständige Hydroxyfunktionen auf. Diese Hydroxyfunktionen, die bei der Herstellung des Polyalkylenoxides entstehen, können jedoch auch endgruppenverschlossen sein. Beispiele hierfür sind der Endgruppenverschluss über Alkylierung mit Methyliodid oder die Bildung eines Essigsäureesters mit Essigsäureanhydrid.

Bei den im erfindungsgemäßen Verlaufmittel eingesetzten Polyalkylenoxiden kann sich jedoch auch um verzweigte Polyalkylenoxide handeln, die drei oder mehr Arme aufweisen.

Bevorzugt als Polyalkylenoxide sind solche, die mindestens eine Hydroxyfunktion enthalten. Beispiele hierfür sind Polyoxypropylenmonobutylether, Polyoxypropylenmonoisotridecylether, Polyoxyethylenoxypropylenmonobutylether, Polyethylenpolypropylenglycolpentaerythritolether, Polyoxypropylenpolyoxyethylencopolymer und Polyoxypropylenether.

Bei der Komponente (b) handelt es sich um ein Poly(meth)acrylat.

Die Poly(meth)acrylate können eine statistische Verteilung der Monomeren entlang der Polymerkette haben, aber auch als Blockcopolymere oder auch als Gradientencopolymere aufgebaut sein. Beispiele für Blockcopolymere, die als Verlaufmittel geeignet sind finden sich in WO 05/059048 und in US 6,197,883.

Die Poly(meth)acrylate haben ein gewichtsmittleres Molekulargewicht von vorzugsweise 1000 bis 100000 g/mol, besonders bevorzugt 2000 bis 50000 g/mol, und ganz besonders bevorzugt im Bereich von 2000 bis 20000 g/mol.

Die Poly(meth)acrylate besitzen vorzugsweise eine Glasübergangstemperatur von unter 30°C, besonders bevorzugt unter 25 °C, wodurch sie sich signifikant von Poly(meth)acrylat-Bindemitteln unterscheiden, die in Pulverlacken verwendet werden. Die Glasübergangstemperatur der Poly(meth)acrylate lässt sich nach DIN ISO 11357-2 mittels Differential Scanning Calorimetry (DSC) bestimmen.

Die Poly(meth)acrylate sind bevorzugt aus folgenden radikalisch polymerisierten monomeren Einheiten aufgebaut: Alkyl(meth)acrylaten von geradkettigen, verzweigten oder cycloaliphatischen Alkoholen mit 1 bis 22 C-Atomen, wie Methyl(meth)acrylat, Ethyl(meth)acrylat, n-Butyl(meth)acrylat, i-Butyl(meth)acrylat, t-Butyl(meth)acrylat, Lauryl(meth)acrylat, 2-Ethylhexyl(meth)acrylat, Stearyl(meth)acrylat, Behenyl(meth)acrylat, Cyclohexyl(meth)acrylat und Isobornyl(meth)acrylat; Aryl(meth)acrylaten, wie Benzylmethacrylat oder Phenylacrylat, wobei die Arylreste Jeweils unsubstituiert oder bis zu vierfach substituiert sein können.

Als monomere Einheiten können auch Etheralkohol-haltige monomere Einheiten verwendet werden. Beispiele hierfür sind Tetrahydrofurfurylmethacrylat, Furfurylmethacrylat, 2-Butoxyethylmethacrylat und 2-Ethoxyethoxyethylacrylat,

Auch der Einbau von Polyestern In Form Caprolacton- und/oder Velerolacton-modifizierter monomerer Einheiten in das polymere Basismolekül Ist möglich. Bevorzugt werden Caprolacton- und/oder Valerolacton-modifizierte Hydroxyalkyl(meth)acrylate mit einem gewichtemittleren Molekulargewicht von 220 bis 1200 g/mol eingesetzt, wobei die Hydroxy(meth)acrylate bevorzugt von geradkettigen, verzweigten oder cycloaliphatischen Diolen mit 2 bis 8 Kohlenstoffatomen abgeleitet sind.

Weitere radikalisch polymerisierte monomere Einheiten können beispielsweise aus der Gruppe bestehend aus Methacrylaten von halogenierten Alkoholen, wie Perfluoralkyl(meth)acrylaten mit 6 bis 20 Kohlenstoffatomen, Styrol und substituierten Styrolen mit einem Alkylsubstitutenten am Ring, wie Vinyltoluol und p-Methylstyrol, gewählt werden.

Weitere mögliche Komponenten (b) der erfindungsgemäßen Verlaufmittel können Kammcopolymere, wie sie In der EP 1 193 299 beschrieben werden, sein.

Die beiden Komponenten (a) und (b) können In einem Mischungsvorgang, der durch Erwärmen der Polymerlösungen unterstützt werden kann, zu den erfindungsgemäßen Verlaufmittel vermischt werden.

Wie bereits oben erwähnt umfasst ein bevorzugtes Verfahren zum Erhalt des erfindungsgemäßen Verlaufmittels die Herstellung der Komponente (b) unter Verwendung der Komponente (a) als Lösemittel oder Trägermedium.

Hierbei erfolgt die Herstellung des Poly(meth)acrylates, d.h. der Komponente (b) in Komponente (a) in der für den Fachmann bekannten Weise.

Komponente (b) kann über radikalisch initiierte Polymerisation zum Beispiel mit Azo- oder Peroxidinitiatoren hergestellt werden. Als Initiatoren kommen Peroxide wie beispielsweise tert.-Butylperoxobenzoat oder Dibenzoylperoxid infrage. Es können aber auch Azo-Verbindungen wie beispielsweise Azoisobutyronitril (AIBN) eingesetzt werden. Bevorzugt werden Peroxide eingesetzt.

Die Polymerisation wird vorzugsweise bei Temperaturen von etwa 40° C bis 180° C, besonders bevorzugt bei 100° C bis 150° C, ganz besonders bevorzugt bei 110° C bis 130° C durchgeführt. Um das gewünschte gewichtsmittlere Molekulargewicht einzustellen, können Kettenregler wie zum Beispiel Thiole, sekundäre Alkohole oder Alkylhalogenide wie Tetrachlorkohlenstoff während der Polymerisation zugegeben werden. Weitere Herstellverfahren für Poly(meth)acrylate können kontrollierte Polymerisationsverfahren sein, wie zum Beispiel:
- der "Reversible Addition Fragmentation Chain Transfer Process" (RAFT), der bei Verwendung bestimmter Polymerisationsregler auch MADIX und Addition Fragmentation Chain Transfer genannt wird, die hier nur als RAFT bezeichnet werden sollen, wie er beispielsweise in Polym. Int. 2000, 49, 993, Aust. J. Chem 2005, 58, 379, J. Polym. Sci. Part A: Polym. Chem. 2005, 43, 5347, US 6 291 620, WO 98/01478, WO 98/58974 und WO 99/31144 beschrieben ist,
- die kontrollierte Polymerisation mit Nitroxylverbindungen als Polymerisationsregler (NMP), wie sie beispielsweise in Chem. Rev. 2001, 101, 3661 offenbart wurde.
- "Atom Transfer Radical Polymerization" (ATRP), wie beispielsweise in WO 96/30421 beschrieben,
- "Group Transfer Polymerization" (GTP) wie beispielsweise von O. W. Webster in "Group Transfer Polymerization", in "Encyclopedia of Polymer Science and Engineering", Band 7, H. F. Mark, N. M. Bikales, C. G. Overberger and G. Menges, Eds., Wiley Interscience, New York 1987, Seite 580 ff. beschrieben wird,
- kontrollierte radikalische Polymerisation mit Organokobaltkomplexen, wie sie beispielsweise in J. Am. Chem. Soc. 1994, 116, 7973 beschrieben wird.

Die erfindungsgemäßen Verlaufmittel werden in den Beschichtungsformulierungen in relativ geringen Mengen von 0,01 bis 5 Gew.-%, bevorzugt 0,05 bis 2 Gew.-%, ganz besonders bevorzugt 0,01 bis 1 Gew.-% eingesetzt.

Die erfindungsgemäßen Verlaufmittel können als Lösungen, Emulsionen, auf Pulver, wie zum Beispiel Kieselsäuren, aufgezogen, oder als 100%-ige Stoffe eingesetzt werden, abhängig von der Art und Applikationsweise des Beschichtungsstoffes.

In lösungsmittelhaltigen Lacken werden bevorzugt Verlaufmittel eingesetzt, die in ähnlichen Lösemitteln angelöst sind wie die Lacke selbst. In strahlenhärtenden Systemen werden Verlaufmittel bevorzugt in entsprechenden Monomeren angelöst.

In Pulverlacken bevorzugt man eine 100%-ige Version des Verlaufmittels beziehungsweise eine auf pulverförmigem Trägermaterial aufgebrachte Form dieser Verlaufmittel. Auch können diese Verlaufmittel gemäß der deutschen Patentanmeldung DE-A-195 22 475 in Wachsschmelzen eingearbeitet werden und auf diese Art und Weise in rieselfähige feste Formen überführt werden, insbesondere wenn die erfindungsgemäßen Verlaufmittel viskose, klebrige Polymere darstellen. In wässrigen Pulverslurrys, einer Unterart der Pulverlacke, können die Verlaufmittel als wässrige Emulsion zugesetzt werden. Diese Emulsionen werden dem Stand der Technik gemäß mit Hilfe von Emulgatoren hergestellt.

Die Erfindung betrifft auch die Verwendung der erfindungsgemäßen Pulverlackverlaufmitteln in oder zur Herstellung von Pulverlacken.

Die Erfindung betrifft weiterhin Pulverlacke, die das erfindungsgemäße Verlaufmittel in einer Konzentration von 0,01 bis 5 Gew.-%, bevorzugt 0,05 bis 2 Gew.-%, besonders bevorzugt 0,1 bis 1 Gew.-%, bezogen auf das Gesamtgewicht des Pulverlacks, enthalten.

Bei den Pulverlacken kann es sich um duroplastische Pulverlacktypen, wie zum Beispiel, Epoxidharze, Hybridsysteme mit COOH-funktionellen Polyesterharzen, Triglycidylisocyanurat-basierte Harze, Tetrahydroxyalkylbisamid-basierte Harze, Polyurethan-Harze und Poly(meth)acrylat-Harze handeln, wobei letztere eine Glasübergangstemperatur von vorzugsweise über 30°C, besonders bevorzugt über 35 °C aufweisen. Es kann sich bei den Pulverlacken jedoch auch um um thermoplastische Beschichtungspulver, zum Beispiel auf der Basis von Polymeren wie Polyamid 11 und 12, Polyethylen, Copolymere mit Vinylalkohol (EVOH-Systemen), Polyvinylchlorid und Fluorpolymeren, handeln.

Weitere Beispiele für Pulverlacke, Pulverlackrohstoffe und - formulierungen sind in der Monographie: Pieter Gillis de Lange "Powder Coatings, Chemistry and Technology", 2004 (Verlag Vincentz Network, ISBN 3-87870-784-3) und in DE 196 44 728 und der dort zitierten Literatur aufgeführt.

### Herstellungsbeispiele

Die Erfindung wird durch nachfolgende Beispiele zusätzlich erläutert:
- Polyether 1:: Butanolgestarteter, monohydroxyfunktioneller Polypropylenoxid-polyether, M_{w} ca. 1250 g/mol
- Polyether 2:: Butanolgestarteter, monohydroxyfunktioneller Polypropylenoxid-polyether, M_{w} ca. 4600 g/mol
- Polyether 3:: Butanolgestarteter, monohydroxyfunktioneller Polypropytenoxidpolyether, M_{w} ca. 7300 g/mol
- Polyether 4:: Dihydroxyfunktioneller Polypropylenoxidpolyether, M_{w} ca. 850 g/mol
- Polyether 5:: Dihydroxyfunktioneller Polypropylenoxidpolyether, M_{w} ca. 7500 g/mol
- Polyether 6:: Butanolgestarteter, monohydroxyfunktioneller Polypropylenoxid-Polyethylenoxidmischpolyether, Ethylenoxid-Propylenoxid-Verhältnis 30:70, M_{w} ca. 4000 g/mol
- Polyether 7:: Dihydroxyfunktioneller Polypropylenoxid-Polyethylenoxid-blockcopolymer, Ethylenoxid-Propylenoxid-Verhältnis 80:20, M_{w} ca. 9900 g/mol

Die gewichtsmittleren Molekulargewichte M_{w} wurden mittels Gelpermeationschromatographie (GPC) bestimmt. Hierbei wurde Polystyrol als Standard verwendet.

### 1) Herstellung des Polyacrylatcopolymer PA1 in Xylol

In einem mit Rührer, Thermometer, Rückflußkühler und Stickstoffeinleitungsrohr versehenen Glaskolben wurden unter N₂-Atmosphäre 42,5 g Xylol vorgelegt und zum Sieden erhitzt. In 4 h wurde eine Mischung aus 51,6 g 2-Ethylhexylacrylat, 118,5 g n-Butylacrylat und 0,09 g Di-tert.-butylperoxid hinzudosiert, wobei die Reaktionstemperatur während der Polymerisation angehoben wurde, so dass immer unter Siedebedingungen polymerisiert wurde. Anschießend wurden weitere 0,01 g Di-tert.-butylperoxid hinzugegeben. Nach einer Nachreaktionszeit von 1 h wurde das Lösemittel abdestilliert.

### 2) Herstellung des Polyacrylatcopolymer PA2 in Polyether 3

In einem mit Rührer, Thermometer, Rückflußkühler und Stickstoffeinleitungsrohr versehenen Glaskolben wurden unter N₂-Atmosphäre 57 g Polyglycol B01/240 vorgelegt und zum Sieden erhitzt. In 4 h wurde eine Mischung aus 51,6 g 2-Ethylhexylacrylat, 118,5 g n-Butylacrylat und 0,09 g Di-tert.-butylperoxid hinzudosiert, wobei die Reaktionstemperatur während der Polymerisation angehoben wurde, so dass immer unter Siedebedingungen polymerisiert wurde. Anschließend wurden weitere 0,01 g Di-tert.-butylperoxid hinzugegeben. Nach einer Nachreaktionszeit von 1 h wurde das Reaktionsgemisch abgekühlt.

### 3) PA3: Mischung von PA 1 mit Polyether 3

57 g Polyether 3 und 170 g PA1 werden bei Raumtemperatur gemischt.

### 4) Pulver 1: Mischung von PA 1 mit Sipernat 22

35 g Sipernat 22 (gefällte Silica, Hersteller Degussa) wird in einem Küchenmixer (Standmixer "Assistent" von AEG) vorgelegt und unter Rühren wird über 5 min 65 g PA1 hinzudosiert.

### 5) Pulver 2: Mischung von PA 3 mit Sipernat 22

35 g Sipernat 22 wird in einem Küchenmixer vorgelegt und unter Rühren wird über 5 min 65 g PA3 hinzudosiert.

### Allgemeine Herstellung der Pulverlacke:

Die Verlaufmittel gemäß den Beispielen wurden als 10%ige Masterbatches in das Pulverlackharz eingearbeitet. Dies wurde bei der Einwaage des Harzes berücksichtigt. Der Masterbatch wird durch Aufschmelzen des entsprechenden Pulverlackharzes und Vermischen mit dem Verlaufmittel hergestellt. Nach dem Abkühlen wird die Masterbatchmischung zerkleinert.

Alle Komponenten wurden zusammen eingewogen und 2,5 min bei 2000 UPM in einem Hochgeschwindigkeitsmischer Mixaco Mischer Lab CM3 vorgemischt. Danach wurden die Mischungen in einem Doppelschnecken-Extruder Prism TSE 16 bei 120°C extrudiert. Die entstandene Harzschmelze wurde gekühlt, gebrochen und in einer Stiftmühle Retsch ZM 100 gemahlen. Das entstandene Pulver wurde über ein 100µm Sieb gegeben.

Die so entstandene Pulverlack-Mischung wurde dann elektrostatisch auf phosphatlerte Eisenbleche appliziert und die so beschichteten Bleche 12 Minuten bei 190°C ausgehärtet.

Bewertung der entstandenen Oberfläche der Pulverlacke:
- ok: Exzellenter Pulverlackaufzug
- MC: Mikrokrater bis ungefähr1 mm Durchmesser
- C: sichtbare Krater, die Teilweise bis auf das Blech gehen

### Abtestung In einem weißen Polyesterhybridpulverlack mit Uralac P 5127

| | | |
|---|---|---|
| Uralac P5127 | 35,6 Gew.-Teile | Polyesterharz, DSM |
| DER 663 UE | 35,6 Gew.-Teile | Epoxyharz, Dow |
| Kronos 2160 | 28,5 Gew.-Teile | Titandioxid, Kronos |
| Benzoin | 0,3 Gew.-Teile | DSM |
| Verlaufmittel | 0,8 Gew.-Teile | siehe Ergebnistabelle |

### Ergebnis:

| Additive | Schichtdicke µm | ok | MC | C | Reduktion des Gleitwiderstandes gegenüber der Nullprobe |
|---|---|---|---|---|---|
| Nullprobe* | 70 - 75 | | | X | |
| PA 1 | 65 - 70 | X | | | nein |
| Polyether 4 | 70 - 75 | | | X | |
| Polyether 1 | 70 - 75 | X | | | ja |
| Polyether 2 | 70 - 75 | X | | | ja |
| Polyether 5 | 65 - 70 | X | | | ja |
| Polyether 6 | 65 - 70 | | | X | |
| Polyether 7 | 70 - 75 | | | X | |
| PA 2 | 75 - 80 | X | | | ja |
| PA 3 | 65 - 70 | X | | | ja |

| | | | | | |
|---|---|---|---|---|---|
| * Zusammensetzung ohne Verlaufmittel (alle weiteren Gewichtsanteile wie oben) | | | | | |

### Abtestung in einem weißen Polyesterpulverlack mit Uralac P 2617-3

| | | |
|---|---|---|
| Uralac P2617-3 | 65,4 Gew.-Teile | Polyesterharz, DSM |
| Primid XL-552 | 3,4 Gew.-Teile | Hydroxyalkylamid-Vernetzer, EMS-Chemie |
| Kronos 2160 | 30 Gew.-Teile | Titandioxid, Kronos |
| Benzoin | 0,4 Gew.-Teile | DSM |
| Verlaufmittel | 0,8 Gew.-Teile | siehe Ergebnistabelle |

### Ergebnis:

| Additive | Schichtdicke µm | Ok | MC | C |
|---|---|---|---|---|
| Nullprobe* | 65 - 70 | | | X |
| PA 1 | 65 - 70 | X | | |
| Polyether 2 | 65 - 70 | X | | |
| PA 2 | 70 - 75 | X | | |
| PA 3 | 60 - 65 | X | | |

| | | | | |
|---|---|---|---|---|
| * Zusammensetzung ohne Verlaufmittel (alle weiteren Gewichtsanteile wie oben) | | | | |

### Abtestung in einem Polyesterpulverklarlack mit Uralac P 865

| | | |
|---|---|---|
| Uralac P865 | 94,1 Gew.-Teile | Polyesterharz, EMS-Chemie |
| Primid XL-552 | 4,9 Gew.-Teile | Hydroxyalkylamid-Vernetzer, EMS-Chemie |
| Benzoin | 0,5 Gew.-Teile | DSM |
| Verlaufmittel | 0,5 Gew.-Teile | siehe Ergebnistabelle |

### Ergebnis:

| Additive | Schichtdicke µm | Ok | MC | C |
|---|---|---|---|---|
| Nullprobe* | 55 - 60 | | | X |
| PA 1 | 60 - 65 | X | | |
| Polyether 2 | 60 - 65 | X | | |
| PA 2 | 60 - 65 | X | | |
| PA 3 | 65 - 70 | X | | |

| | | | | |
|---|---|---|---|---|
| * Zusammensetzung ohne Verlaufmittel (alle weiteren Gewichtsanteile wie oben) | | | | |

### Abtestung in einem Polyesterhybridpulverklarlack mit Uralac P 3495

| | | |
|---|---|---|
| Uralac P3495 | 91,1 Gew.-Telle | Polyesterharz, DSM |
| Araldite PT 910 | 6,9 Gew.-Telle | Triglycidyltrimellitat-Vernetzer, Vantico |
| Benzoln | 0,4 Gew.-Telle | DSM |
| Verlaufmittel | 0,8 Gew.-Telle | siehe Ergebnistabelle |

### Ergebnis:

| Additive | Schichtdicke µm | Ok | MC | C |
|---|---|---|---|---|
| Nullprobe* | 75 - 80 | | | X |
| PA1 | 75 - 80 | X | | |
| Polyether 2 | 75 - 80 | X | | |
| PA2 | 75 - 80 | X | | |
| PA 3 | 75 - 80 | X | | |

| | | | | |
|---|---|---|---|---|
| * Zusammensetzung ohne Verlaufmittel (alle weiteren Gewichtsanteile wie oben) | | | | |

### Abtestung In einem Epoxidklarlackes mit Epikote 3003

| | | |
|---|---|---|
| Eplkote 3003 | 95,0 Gew.-Teile | Epoxiharz, Resolution |
| Epicure P 108 | 4,0 Gew.-Teile | Dicyandiamidhärter, Resolution |
| Benzoln | 0,4 Gew.-Teile | DSM |
| Verlaufmittel | 0,6 Gew.-Teile | siehe Ergebnistabelle |

### Ergebnis:

| Additive | Schichtdicke µm | Ok | MC | C |
|---|---|---|---|---|
| Nullprobe* | 70 - 75 | | | X |
| PA 1 | 65 - 70 | X | | |
| Polyether 2 | 65 - 70 | X | | |
| PA 2 | 70 - 75 | X | | |
| PA 3 | 66 - 70 | X | | |

| | | | | |
|---|---|---|---|---|
| * Zusammensetzung ohne Verlaufmittel (alle weiteren Gewichtsanteile wie oben) | | | | |

### Abtestung der pulverförmigen Verlaufmittel In einem weißen Polyesterhybridpulverlack mit Uralac P 5127

| | | |
|---|---|---|
| Uralac P5127 | 35,6 Gew.-Teile | Polyesterharz, DSM |
| DER 663 UE | 35,6 Gew.-Teile | Epoxyharz, Dow |
| Kronos 2160 | 28,5 Gew.-Teile | Titendioxid, Kronos |
| Benzoin | 0,3 Gew.-Teile | DSM |
| Verlaufmittel | 1,25 Gew.-Teile | siehe Ergebnistabelle |

Alle Komponenten wurden zusammen eingewogen und 2,5 min bei 2000 UPM in einem Hochgeschwindigkeitsmischer Mixaco Mischer Lab CM3 vorgemischt. Danach wurden die Mischungen In einem Doppelschnecken-Extruder Prism TSE 16 bei 120°C extrudiert. Die entstandene Harzschmelze wurde gekühlt, gebrochen und In einer Stiftmühle Retsch ZM 100 gemahlen. Das entstandene Pulver wurde über ein 100µm Sieb gegeben.

Die so entstandene Pulverlack-Mischung wurde dann elektrostatisch auf phosphatierte Eisenbleche appliziert und die so beschichteten Bleche 12 Minuten bei 190°C ausgehärtet.

### Ergebnis:

| Additive | Schichtdicke µm | Ok | MC | C | Reduktion des Gleitwiderstandes gegenüber der Nullprobe |
|---|---|---|---|---|---|
| Nullprobe* | 70 - 75 | | | X | |
| Pulver 1 | 60 - 75 | X | | | nein |
| Pulver 2 | 75 - 78 | X | | | Ja |

| | | | | | |
|---|---|---|---|---|---|
| * Zusammensetzung ohne Verlaufmittel (alle weiteren Gewichtsanteile wie oben) | | | | | |

## Patentansprüche

1. Pulverlackverlaufmittel umfassend
(a) mindestens einen Polypropylenoxid-haltigen Polyether mit einem gewichtsmittleren Molekulargewicht größer 1000 g/mol und einem Polypropylenoxidanteil größer als 75 Gew-% und
(b) mindestens ein Poly(meth)acrylat.

2. Pulverlackverlaufmittel nach Anspruch 1, wobei der Polypropylenoxid-haltige Polyether einen Polypropylenoxidanteil größer 90 Gew.-% besitzt.

3. Pulverlackverlaufmittel nach Anspruch 1 oder 2, wobei das Poly(meth)acrylat ein gewichtsmittleres Molekulargewicht von 1000 bis 100000 g/mol besitzt.

4. Pulverlackvetiaufmtttel nach einem oder mehreren der Ansprüche 1 bis 3, wobei die Glasübergangstemperatur des Poly(meth)acrylats weniger als 30 °C beträgt

5. Pulverlackverlaufmittel nach einem oder mehreren der Ansprüche 1 bis 4, wobei der oder die Polypropylenoxid-haltige(n) Polyether (a) in einer Menge von 10 bis 100 Gew.-% bezogen auf die Summe der Gewichtsanteile aus Polypropylenoxid-haltigem Polyether (a) und Poly(meth)acrylat (b) enthalten sind.

6. Pulverlackverlaufmittel nach Anspruch 5, wobei der oder die Polypropylenoxid-haltige(n) Polyether (a) in einer Menge von 10 bis 75 Gew.-% bezogen auf die Summe der Gewichtsanteile aus Polypropylenoxid-haltigem Polyether (a) und Poly(meth)acrylat (b) enthalten sind.

7. Verfahren zur Herstellung eines Pulverlackverlaufmittels nach einem oder mehreren der Ansprüche 1 bis 6, **dadurch gekennzeichnet, dass** das oder die Poly(meth)acrylate (b) durch radikalische Polymerisation In dem oder den Polypropylenoxid-haltigen Polyethern (a) hergestellt werden.

8. Verwendung der Pulverlackverlaufmittel definiert nach einem der Ansprüche 1 bis 6 oder hergestellt nach Anspruch 7 in duroplastischen oder thermoplastischen Pulverlacken.

9. Verwendung nach Anspruch 8, wobei der duroplastische Pulverlack als Bindemittel mindestens ein Bindemittel gewählt aus der Gruppe bestehend aus Epoxidharzen, Hybridsystemen mit carboxyfunktionellen Polyesterharzen, Triglycidylisocyanurat-basierte Harze, Tetrahydroxyalkylbisamid-basierte Harze, Polyurethan-Harze und Poly(meth)acrylat-Harze enthält.

10. Verwendung nach Anspruch 8, wobei der thermoplastische Pulverlack mindestens ein Polymer aus der Gruppe bestehend aus Polyamid 11, Polyamid 12, Polyethylen, Copolymere des Vinylalkohols, Polyvinylchlorid und Fluorpolymeren enthält.

11. Verwendung nach einem oder mehreren der Ansprüche 8 bis 10, wobei das Pulverlackverlaufmittel als solches oder an ein festes Trägermaterial gebunden in den Pulverlack eingesetzt wird.

12. Pulverlack enthaltend ein Pulverlackverlaufmittel gemäß einem oder mehreren der Ansprüche 1 bis 6 oder hergestellt nach dem Verfahren gemäß Anspruch 7 in einer Menge von 0,01 bis 5 Gew.-% bezogen auf das Gesamtgewicht des Pulverlacks.

13. Pulverlack nach Anspruch 12, wobei es sich um einen duroplastischen oder thermoplastischen Pulverlack handelt.

14. Pulverlack nach Anspruch 13, wobei der duroplastische Pulverlack als Bindemittel mindestens ein Bindemittel gewählt aus der Gruppe bestehend aus Epoxidharzen, Hybridsystemen mit carboxyfunktionellen Polyesterharzen, Triglycidylisocyanurat-basierte Harze, Tetrahydroxyalkylbisamid-basierte Harze, Polyurethan-Harze und Poly(meth)acrylat-Harze enthält.

15. Pulverlack nach Anspruch 13, wobei der thermoplastische Pulverlack mindestens ein Polymer aus der Gruppe bestehend aus Polyamid 11, Polyamid 12, Polyethylen, Copolymere des Vinylalkohols, Polyvinylchlorid und Fluorpolymeren enthält.

## Claims

1. A powder coating leveling agent comprising
(a) at least one polypropylene oxide-containing polyether having a weight-average molecular weight of more than 1000 g/mol and a polypropylene oxide fraction of more than 75% by weight, and
(b) at least one poly(meth)acrylate.

2. The powder coating leveling agent of claim 1, where the polypropylene oxide-containing polyether possesses a polypropylene oxide fraction of more than 90% by weight.

3. The powder coating leveling agent of claim 1 or 2, where the poly(meth)acrylate possesses a weight-average molecular weight of 1000 to 100 000 g/mol.

4. The powder coating leveling agent of one or more of claims 1 to 3, where the glass transition temperature of the poly(meth)acrylate is less than 30°C.

5. The powder coating leveling agent of one or more of claims 1 to 4, where the polypropylene oxide-containing polyether or polyethers (a) are present in an amount of 10% to 100% by weight, based on the sum of the weight fractions of polypropylene oxide-containing polyether (a) and poly(meth)acrylate (b).

6. The powder coating leveling agent of claim 5, where the polypropylene oxide-containing polyether or polyethers (a) are present in an amount of 10% to 75% by weight, based on the sum of the weight fractions of polypropylene oxide-containing polyether (a) and poly(meth)acrylate (b).

7. A process for preparing a powder coating leveling agent of one or more of claims 1 to 6, **characterized in that** the poly(meth)acrylate or poly(meth)acrylates (b) are prepared by radical polymerization in the polypropylene oxide-containing polyether or polyethers (a).

8. The use of the powder coating leveling agents defined as claimed in any of claims 1 to 6 or prepared as claimed in claim 7 in thermosetting or thermoplastic powder coating materials.

9. The use of claim 8, where the thermosetting powder coating material comprises as binder at least one binder selected from the group consisting of epoxy resins, hybrid systems with carboxy-functional polyester resins, triglycidyl isocyanurate-based resins, tetrahydroxyalkylbisamide-based resins, polyurethane resins, and poly(meth)acrylate resins.

10. The use of claim 8, where the thermoplastic powder coating material comprises at least one polymer from the group consisting of polyamide 11, polyamide 12, polyethylene, copolymers of vinyl alcohol, polyvinyl chloride and fluoropolymers.

11. The use of one or more of claims 8 to 10, where the powder coating leveling agent is used as it is or bound to a solid carrier material in the powder coating material.

12. A powder coating material comprising a powder coating leveling agent as claimed in one or more of claims 1 to 6 or prepared as claimed in the process of claim 7, in an amount of 0.01% to 5% by weight, based on the total weight of the powder coating material.

13. The powder coating material of claim 12, being a thermosetting or thermoplastic powder coating material.

14. The powder coating material of claim 13, where the thermosetting powder coating material comprises as binder at least one binder selected from the group consisting of epoxy resins, hybrid systems with carboxy-functional polyester resins, triglycidyl isocyanurate-based resins, tetrahydroxyalkylbisamide-based resins, polyurethane resins, and poly(meth)acrylate resins.

15. The powder coating material of claim 13, where the thermoplastic powder coating material comprises at least one polymer from the group consisting of polyamide 11, polyamide 12, polyethylene, copolymers of vinyl alcohol, polyvinyl chloride and fluoropolymers.

## Revendications

1. Agent d'écoulement pour peintures en poudre, comportant
(a) au moins un polyéther contenant de l'oxyde de polypropylène, avec un poids moléculaire moyen en poids supérieur à 1000 g/mol et une teneur d'oxyde de polypropylène supérieure à 75 % en poids, et
(b) au moins un poly(méth)acrylate.

2. Agent d'écoulement pour peintures en poudre selon la revendication 1, dans lequel le polyéther contenant de l'oxyde de polypropylène présente une teneur d'oxyde de polypropylène supérieure à 90 % en poids.

3. Agent d'écoulement pour peintures en poudre selon la revendication 1 ou 2, dans lequel le poly(méth)acrylate présente un poids moléculaire moyen en poids de 1000 à 100000 g/mol.

4. Agent d'écoulement pour peintures en poudre selon une ou plusieurs des revendications 1 à 3, dans lequel la température de transition vitreuse du poly(méth)acrylate est inférieure à 30°C.

5. Agent d'écoulement pour peintures en poudre selon une ou plusieurs des revendications 1 à 4, dans lequel le ou les polyéther(s) (a) contenant de l'oxyde de polypropylène est/sont contenu(s) dans une quantité de 10 à 100 % en poids par rapport à la somme des proportions pondérales du polyéther (a) contenant de l'oxyde de polypropylène et du poly(méth)acrylate (b).

6. Agent d'écoulement pour peintures en poudre selon la revendication 5, dans lequel le ou les polyéther(s) (a) contenant de l'oxyde de polypropylène est/sont contenu(s) dans une quantité de 10 à 75 % en poids par rapport à la somme des proportions pondérales du polyéther (a) contenant de l'oxyde de polypropylène et du poly(méth)acrylate (b).

7. Procédé pour la fabrication d'un agent d'écoulement pour peintures en poudre selon une ou plusieurs des revendications 1 à 6, **caractérisé en ce que** le ou les poly(méth)acrylate(s) (b) est/sont fabriqué(s) par polymérisation par radicaux dans le ou les polyéther(s) (a) contenant de l'oxyde de polypropylène.

8. Utilisation de l'agent d'écoulement pour peintures en poudre défini selon l'une quelconque des revendications 1 à 6 ou fabriqué selon la revendication 7 dans des peintures en poudre duroplastiques ou thermoplastiques.

9. Utilisation selon la revendication 8, dans laquelle la peinture en poudre duroplastique contient, en tant que liant, au moins un liant choisi dans le groupe consistant en des résines époxyde, systèmes hybrides avec des résines polyester carboxyfonctionnelles, résines à base de l'isocyanurate de triglycidyle, résines à base de bisamide de tétrahydroxyalkyle, résines polyuréthane et résines poly(méth)acrylate.

10. Utilisation selon la revendication 8, dans laquelle la peinture en poudre thermoplastique contient au moins un polymère du groupe consistant en polyamide 11, polyamide 12, polyéthylène, copolymères de l'alcool vinylique, polychlorure de vinyle et polymères fluorés.

11. Utilisation selon l'une ou plusieurs des revendications 8 à 10, dans laquelle l'agent d'écoulement pour peintures en poudre est utilisé dans la peinture en poudre dans sa forme d'origine, ou fixé à un matériau de support solide.

12. Peinture en poudre contenant un agent d'écoulement pour peintures en poudre selon une ou plusieurs des revendications 1 à 6 ou fabriqué selon le procédé selon la revendication 7 dans une quantité de 0,01 à 5 % en poids par rapport au poids total de la peinture en poudre.

13. Peinture en poudre selon la revendication 12, la peinture étant une peinture en poudre duroplastique ou thermoplastique.

14. Peinture en poudre selon la revendication 13, la peinture en poudre duroplastique contenant, en tant que liant, au moins un liant choisi dans le groupe consistant en des résines époxyde, systèmes hybrides avec des résines polyester carboxyfonctionnelles, résines à base de l'isocyanurate de triglycidyle, résines à base de bisamide de tétrahydroxyalkyle, résines polyuréthane et résines poly(méth)acrylate.

15. Peinture en poudre selon la revendication 13, la peinture en poudre thermoplastique contenant au moins un polymère du groupe consistant en polyamide 11, polyamide 12, polyéthylène, copolymères de l'alcool vinylique, polychlorure de vinyle et polymères fluorés.
